(19) Europäisches Patentamt
European Patent Office
Office européen des brevets

(11) Publication number: 0 113 960 A1

# (12) EUROPEAN PATENT APPLICATION

(21) Application number: 83307211.9

(22) Date of filing: 25.11.83

(51) Int. Cl.[3]: C 08 F 10/10, C 08 F 4/62

(30) Priority: 15.12.82 GB 8235660

(43) Date of publication of application: 25.07.84 Bulletin 84/30

(84) Designated Contracting States: AT BE DE FR GB IT NL SE

(71) Applicant: IMPERIAL CHEMICAL INDUSTRIES PLC, Imperial Chemical House Millbank, London SW1P 3JF (GB)

(72) Inventor: Kelland, John William, 9 Raifland Way Nunthorpe, Middlesbrough Cleveland (GB)

(74) Representative: James, David Gomer et al, Imperial Chemical Industries PLC Legal Department: Patents Po Box 6, Welwyn Garden City Herts, AL7 1HD (GB)

## (54) Production and use of magnesium halide composition.

(57) A magnesium halide composition includes at least two Lewis Base compounds, wherein one Lewis Base is of the formula $(RO)_nAr(COOR^1)_m$, for example, ethyl-4-methoxybenzoate and the other Lewis Base compound is typically an ester such as ethyl benzoate. The magnesium halide composition can be obtained by contacting a magnesium halide with the specified Lewis Base compounds and also, preferably, with a non-metallic halide such as thionyl chloride. The contacting is conveniently effected by grinding all these materials together. The magnesium halide composition may be treated with a transition metal compound, preferably undiluted titanium tetrachloride. The treatment with titanium tetrachloride may be repeated. The solid product of treatment with titanium tetrachloride can be washed at least once. The product obtained by treatment with the transition metal compound may be combined with an organic metal compound such as aluminium triethyl and preferably a Lewis Base such as ethyl benzoate or an organic silicon compound to give olefin polymerisation catalyst.

EP 0 113 960 A1

0113960
P32537/EP

# PRODUCTION AND USE OF MAGNESIUM HALIDE COMPOSITION

The present invention relates to a magnesium halide composition, the production of such a composition, the treatment of the composition with a transition metal compound, catalyst systems containing such treated compositions and the use of such catalyst systems to polymerise unsaturated monomers, particularly olefin monomers such as ethylene and propylene.

In recent years, considerable effort has been directed to the production of polymerisation catalysts which are highly active whereby there is no need to remove catalyst residues from the polymer at the end of the polymerisation. For the polymerisation of propylene and the higher olefin monomers it is also necessary that the catalyst system should be stereospecific. Considerable effort has been directed to producing catalysts which combine high activity with good stereospecificity and catalysts have been developed which are capable of giving high yields of propylene polymers which are more than 90% insoluble in boiling heptane. Catalyst systems having such characteristics include those in which one component is obtained by contacting a magnesium halide with a transition metal compound.

The improvements in the catalyst system have made it possible to modify the polymerisation technique used. In particular, the polymerisation technique may be simplified to avoid the steps of post-treating the polymer product, which post-treatment has been necessary hitherto. To simplify the process even further, processes are now being used in which the polymerisation is carried out in the absence of any substantial quantity of inert hydrocarbon liquids in contrast to many prior art processes in which inert hydrocarbon liquids are used as the suspension medium for the polymerisation process. In one technique, which avoids the use of any substantial quantity of inert

hydrocarbon liquids, polymerisation is effected by using the monomer in the gaseous state and by contacting this gaseous monomer with growing polymer particles which contain active polymerisation catalyst. Using such a technique, the whole polymer product can be recovered without separating any atactic polymer which may be formed. Hence, for use in such a process, it is necessary that the catalyst system should be particularly stereospecific. Whilst some catalyst systems disclosed in the art, for example magnesium halide-supported materials such as are described in British patent specifications 1 540 323 and 1 559 194, have high activity and good stereospecificity, we have found that these systems are not sufficiently stereospecific to give an entirely acceptable propylene polymer product when used in a gas phase polymerisation process. However, using a modified magnesium halide material, we have been able to produce a catalyst component from which a catalyst system having an improved stereospecificity can be obtained. Such a catalyst system has been found to be suitable for use in the gas phase polymerisation process to give propylene polymer products having useful properties.

According to the present invention there is provided a magnesium halide composition which includes a) at least one compound of the formula

$$(RO)_nAr(COOR^1)_m$$

and b) at least one organic Lewis Base compound which is other than a compound of the formula

$$(RO)_nAr(COOR^1)_m$$

wherein:

Ar is a residue of an aromatic hydrocarbon, or an aromatic halohydrocarbon;

R is a hydrocarbon radical or a halohydrocarbon radical;

$R^1$ is hydrogen, a hydrocarbon radical or a halohydrocarbon radical; and

m is an integer;

n is 0 or an integer; and

(m+n) has a value of at least two.

The group Ar typically is a divalent residue derived from an aromatic hydrocarbon such as benzene or naphthalene for example a divalent benzene residue wherein the unoccupied valencies are in the para-position to each other. Each of the groups R and $R^1$ is typically a hydrocarbon radical, especially an alkyl group, particularly one containing up to 10 carbon atoms, for example an alkyl group containing 1 to 6 carbon atoms such as a methyl, ethyl or butyl group. The value of m is typically 1 or 2 and the value of n is, correspondingly, 1 or 0. It is preferred to use compounds in which m and n both have a value of one. For convenience hereafter, the compound of the formula $(RO)_nAr(COOR^1)_m$ will be referred to as a "substituted ester". Examples of the substituted esters are 4-methoxybenzoic acid and ethyl 4-methoxybenzoate.

The substituted ester is typically present in an amount of at least 0.001 up to 0.5 moles for each mole of the magnesium halide, preferably in an amount of from 0.01 up to 0.2 moles, and especially from 0.02 up to 0.1 moles, for each mole of magnesium chloride.

The organic Lewis Base compound which is other than a compound of the formula $(RO)_nAr(COOR^1)_m$ will hereafter be referred to simply as the "Lewis Base compound". A wide range of compounds may be present as the Lewis Base compound and the preferred compounds are esters, other than those satisfying the general formula

$(RO)_nAr(COOR^1)_m$, and organic silicon compounds. Esters which may be present as the Lewis Base compound include esters of the formula

$$R^2COOR^3$$

wherein

$R^2$ is a hydrocarbon radical or a halogen substituted hydrocarbon radical; and

$R^3$ is a hydrocarbon radical or a halogen substituted hydrocarbon radical.

Organic silicon compounds which may be present include compounds containing one or more Si-$OR^4$, Si-$OCOR^4$ or Si-$NR^4$ bonds,

wherein

$R^4$ is a hydrocarbon radical which may be substituted with one or more halogen atoms and/or oxyhydrocarbon groups.

Esters of the formula $R^2COOR^3$ include those in which the groups $R^2$ and $R^3$ may be the same or different and preferably those in which one, but not both, of the groups $R^2$ and $R^3$ includes an aryl group. The group $R^2$ is conveniently an optionally substituted alkyl or aryl group, for example, a methyl, an ethyl or especially a phenyl, a methylphenyl, a methoxyphenyl, a fluorophenyl or a benzyl group. The group $R^3$ is preferably an alkyl group containing up to 6 carbon atoms, for example a methyl, an ethyl or a butyl group. It is particularly preferred that $R^2$ is, or contains, an aryl group and that $R^3$ is an alkyl group. Examples of esters of the formula $R^2COOR^3$ include methyl benzoate, methyl 4-methylbenzoate, and ethyl benzoate.

Organic silicon compounds which may be present in the magnesium halide composition include phenyltriethoxysilane, diphenyl di-isobutoxysilane and iso-butyltriethoxysilane.

The Lewis Base compound is conveniently present in an amount of up to 5 moles for each mole of the magnesium halide, for example up to 2, and especially from 0.02 up to 1, moles of the Lewis Base compound for each mole of magnesium halide. The Lewis Base compound is preferably present in a molar proportion which is greater than the molar proportion of the substituted ester which is present in the magnesium halide composition.

As a preferred aspect of the present invention, the substituted ester is one in which Ar is a divalent residue derived from benzene and R and $R^1$ are both alkyl groups. The Lewis Base compound is preferably an ester of the formula $R^2COOR^3$ where $R^2$ is, or contains, an aryl group and $R^3$ is an alkyl group.

A particularly preferred composition in accordance with the present invention is one in which ethyl 4-methoxybenzoate is the substituted ester and ethyl benzoate is the Lewis Base compound.

The magnesium halide present in the composition of the present invention is preferably a magnesium chloride. The magnesium halide may include other metal compounds, such as alkali metal or alkaline earth metal halides, and may also include metal oxides, including magnesium oxide. If other metal compounds are present, it is preferred that the proportion of such other metal compounds does not exceed 10% by weight relative to the magnesium halide. The preferred magnesium halide present in the composition is an essentially anhydrous magneisum halide, typically one having a water content of not more than 2% by weight and especially not more than 1% by weight.

The magnesium halide composition may optionally include at least one compound of the formula

$$AO_aX_{(b-2a)}$$

wherein

A is a non-metallic element, other than oxygen, of Group IV to VI of the Periodic Table;

X is a halogen atom;

a has a value of 1 or 2 and the value of 2a is less than the valency of A; and

b is equal to the valency of A.

For convenience hereafter the compound of the formula

$$AO_aX_{(b-2a)}$$

will be referred to as the "non-metallic halide". The non-metallic element A is preferably an element of the second or third series of the Periodic Table such as carbon or sulphur. The value of a in the non-metallic halide is preferably one. The halogen atom X is conveniently chlorine. We have obtained particularly useful results when thionyl chloride ($SOCl_2$) is the non-metallic halide.

The non-metallic halide is conveniently present in an amount of not more than 50% by weight relative to the magnesium halide and particularly is present in an amount of not more than 25%, by weight relative to the magnesium halide.

The present invention also provides a process of producing the magnesium halide composition.

Thus, according to a further aspect of the present invention, there is provided a process for the production of a magnesium halide composition which process comprises contacting a magnesium halide with a) at least one compound of the formula

$$(RO)_nAr(COOR^1)_m$$

and b) at least one organic Lewis Base compound which is other than a compound of the formula

$$(RO)_nAr(COOR^1)_m.$$

wherein

Ar, R, $R^1$, m and n are all as hereinbefore defined.

Optionally, the magnesium halide is also contacted with at least one compound of the formula

$$AO_aX_{(b-2a)}$$

wherein A, X, a and b are all as hereinbefore defined.

The substituted ester and the Lewis Base compound are typically used in the proportions disclosed herein for the proportion of these components in the magnesium halide composition.

The optional non-metallic halide is conveniently used in an amount of at least 1%, and not more than 50%, by weight relative to the magnesium halide and particularly in an amount of at least 2%, and not more than 25%, by weight relative to the magnesium halide.

The substituted ester, the Lewis Base compound and the optional non-metallic halide may be contacted with the magnesium halide by adding the materials in turn, in any order, to the magnesium halide. Alternatively, the materials may be added essentially simultaneously, that is within not more than 5 minutes of each other, to the magnesium halide.

According to a further aspect of the present invention, the magnesium halide is first contacted with the non-metallic halide and then, either simultaneously or sequentially, in either order, with the substituted ester and the Lewis Base compound.

We have obtained particularly useful results using ethyl 4-methoxybenzoate as the substituted ester, ethyl benzoate as the Lewis Base compound and thionyl chloride as the optional non-metallic halide.

The magnesium halide may be contacted with the substituted ester, the Lewis Base compound and, if desired, the optional non-metallic halide, using any suitable contacting technique. A convenient technique for effecting the contacting is by grinding together the magnesium halide and the desired proportions of the substituted ester, the Lewis Base compound, and the optional non-metallic halide.

The grinding may be carried out in any suitable grinding apparatus such as, for example, a rotating ball mill or a vibrating ball mill. The grinding is preferably carried out in the substantial absence of oxygen or moisture.

The grinding conditions will be dependent on the grinding technique and on the nature of the materials being ground. However, in general it is preferred to carry out the grinding for a period of from 1 hour up to 5 days particularly from 5 up to 50 hours. Any suitable temperature may be used for the grinding, for example, from -50°C up to 100°C, especially from -10°C up to 80°C, and, if desired, the temperature may be varied during the grinding operation. The grinding may be carried out without applying heating or cooling to the pulverising apparatus. However, the conditions of grinding are generally such that heat is generated during the grinding and hence, in order to operate at an essentially constant temperature, for example ambient temperature, which is the generally desired procedure, it may be necessary to apply cooling to the grinding apparatus. The need for cooling will be dependent on the mill size and the milling conditions.

The intensity of grinding will be dependent upon the type of grinding apparatus which is being used. Using a rotating ball mill, it is preferred that the mill is rotated at between 50% and 90% of the critical speed. By critical speed is meant the speed at which particles and balls are held by centrifugal force against the walls of the mill and do not tumble. Using a vibration mill, the mill is preferably operated to give an acceleration of between 12 and 200 metres per $sec^2$. Since the vibration mill gives a more intensive grinding, a shorter time of grinding is generally possible using such a mill than when a rotating ball mill is used.

If the magnesium halide is contacted with the optional non-metallic halide during the grinding, the non-metallic halide may be added to the magnesium halide either before or after adding the substituted ester and the Lewis Base compound, or at the same time as the substituted ester and the Lewis Base compound are added, and is preferably added before the other materials are added. If the non-metallic halide is added first, and contacting is effected by grinding, it is preferred to effect the grinding for from 30 minutes up to 30 hours, particularly one up to six hours, before the other materials are added, and to continue grinding in the presence of these other added materials, preferably for a further at least 5 hours up to 30 hours after each addition of other materials.

The magnesium halide composition of the present invention may be used to produce a transition metal composition by contacting the magnesium halide composition, or a precursor thereof, with a compound of a transition metal of Groups IVA to VIA of the Periodic Table. The transition metal composition thus obtained can be used as a component of an olefin polymerisation catalyst. Particularly useful transition metal

compositions are obtained when the compound of a transition metal is titanium tetrachloride.

Thus, as a further aspect of the present invention there is provided a magnesium halide-transition metal composition which contains a) a magnesium halide; b) a compound of a transition metal of Groups IVA to VIA of the Periodic Table; c) at least one compound of the formula

$$(RO)_nAr(COOR^1)_m$$

and d) at least one organic Lewis Base compound which is other than a compound of the formula

$$(RO)_nAr(COOR^1)_m$$

wherein

Ar, R, $R^1$, m and n are as hereinbefore defined.

The magnesium halide-transition metal composition may also include at least one compound of the formula

$$AO_aX_{(b-2a)}$$

wherein A, X, a and b are as herein defined. The preferred non-metallic halide is thionyl chloride which is a volatile material and hence may be present in the magnesium halide composition, or the magnesium halide-transition metal composition, in an amount which is substantially less than the amount of the non-metallic halide which is used in the production of such compositions.

According to a further apect of the present invention, a magnesium halide-transition metal composition is obtained by effecting the process for the production of a magnesium halide composition as hereinbefore described and including an additional step of contacting a magnesium

halide material with a compound of a transition metal of Groups IVA to VIA of the Periodic Table (hereafter "transition metal compound"), particularly titanium tetrachloride or a titanium tetrachloride-containing material. For convenience "titanium tetrachloride" will be used hereafter to include the titanium tetrachloride-containing material.

The magnesium halide material which is contacted with the compound of a transition metal may be the magnesium halide starting material, an intermediate magnesium halide material or the magnesium halide composition of the present invention.

The contacting with the transition metal compound may be effected in more than one stage, for example in two stages, but satisfactory results can be obtained by effecting the contacting in only one stage.

After contacting with the transition metal compound, the product obtained, which is a solid magnesium halide-transition metal composition, is preferably separated from any excess quantity of any liquid phase which is present and the product may be washed to remove at least some soluble transition metal-containing species, including adsorbed transition metal compounds, from the separated solid. However, we have found that it is not necessary to effect the washing of the solid product to remove all of the soluble transition metal-containing species from the solid product.

The contacting with the transition metal compound may be effected using a liquid phase which typically contains more than 25% by weight of the transition metal compound, and it is preferred that the liquid phase contains at least 45% by weight of the transition metal compound. It is especially preferred that the liquid phase consists solely of a liquid transition metal compound, particularly titanium tetrachloride. If a solution of the transition

metal compound is used, the solvent is preferably an inert material, particularly an inert hydrocarbon or halohydrocarbon, especially an aliphatic hydrocarbon.

The magnesium halide-transition metal composition may be prepared by suspending a magnesium halide material, particularly a magnesium halide composition obtained in the manner hereinbefore described, in an excess quantity of a liquid containing the transition metal compound and agitating the mixture, for example by stirring. In effecting contacting in this manner, the volume of the liquid is typically not less than the volume of the magnesium halide composition and typically there is used 1 to 10 especially 2 to 8 volumes of the liquid for each volume of the magnesium halide material. Preferably, the contacting of the magnesium halide material with the liquid is effected, at least partially, at an elevated temperature which is conveniently at least 60°C up to the boiling temperature of the liquid phase, which is 137°C when the liquid phase is undiluted titanium tetrachloride. Preferably, the foregoing process of contacting is effected at a temperature in the range 80°C up to 120°C. When effecting contacting with titanium tetrachloride, the magnesium halide material may be contacted with titanium tetrachloride when the latter is at the desired elevated temperature or the magnesium halide material may be added to the titanium tetrachloride at a lower temperature, which is conveniently ambient temperature, and the mixture is then heated to the desired elevated temperature.

As an alternative to suspending the magnesium halide material in a liquid medium containing the transition metal compound, the contacting of the magnesium halide material with transition metal compound may be effected by grinding. If the magnesium halide composition is obtained by a grinding process, the contacting with the transition metal compound can be effected in the same grinding

apparatus by adding the transition metal compound, preferably undiluted titanium tetrachloride, and continuing to grind for a suitable period of time. Using a grinding process and titanium tetrachloride the volume of the titanium tetrachloride is preferably less than the volume of the magnesium halide material. Preferably, during grinding, not more than one mole of the transition metal compound is present for each mole of the magnesium halide material, and the amount of the transition metal compound is typically from 0.01 up to 0.5, and especially from 0.02 up to 0.1, moles for each mole of the magnesium halide. The proportion of the transition metal compound used in the grinding may also be related to the amount of total Lewis Base compound which is used and is conveniently from 0.5 up to 2 moles, for example one mole, for each mole of the substituted ester, plus the Lewis Base compound. If desired, the transition metal compound may be used as a complex with the substituted ester, or the Lewis Base compound, for example as a complex with a Lewis Base compound which is an ester of the formula $R^2COOR^3$. The grinding of the magnesium halide material and the transition metal compound may be effected at a temperature in the range which is suitable for grinding the magnesium halide with the substituted ester, the Lewis Base compound and the optional non-metallic halide, and is conveniently effected without applying heating or cooling to the grinding apparatus. If the magnesium halide-transition metal composition is prepared by grinding, the transition metal compound may be contacted with the magnesium halide before, during or after contacting the magnesium halide with the substituted ester, the Lewis Base compound and the optional non-metallic halide.

If contacting with the transition metal compound is effected in more than one stage, such a procedure may be effected by grinding the magnesium halide material with

the transition metal compound and thereafter suspending the product in a liquid medium which is, or which contains, the transition metal compound.

If a magnesium halide composition is suspended in titanium tetrachloride to effect contacting, the contacting is conveniently effected for a period of time of from 0.25 hours up to 10 hours, for example 0.5 up to 5 hours. If contacting is effected by grinding, a longer period of time may be used such as up to 5 days, for example from 2 up to 80 hours, conveniently 5 up to 50 hours.

After the desired time of contacting with the transition metal compound, the solid magnesium halide-transition metal composition obtained is preferably separated from any excess liquid phase which is present. The separation is effected by any suitable technique, for example by allowing the solid to settle and removing the supernatant liquid phase from the settled solid by a technique such as decantation, or using a siphon, or by using a technique such as filtration which gives essentially complete separation. Although filtration gives more complete separation than is readily achieved by settling and removing the supernatant liquid, we have found that, when using a grinding process in operating the process of the present invention, the solid may include fine particulate material, for example at least 10% by weight of particles having a particle size of less than 5 microns. The presence of this fine particulate material can cause blockage of the filter and this is undesirable on a commercial scale and outweighs any advantage of complete separation.

If the contacting with the transition metal compound is repeated, each repeat contacting may be effected under the conditions hereinbefore described. If more than one contacting step is effected, it is convenient, but not

essential, for each step to be effected under essentially the same conditions of temperature and time.

After contacting the magnesium halide material with the transition metal compound, the solid magnesium halide-transition metal composition is preferably separated from any excess liquid phase which is present and thereafter washed at least once with an inert hydrocarbon or halohydrocarbon. Suitable inert liquids include hexane, heptane, octane, decane, dodecane and mixtures of the isomers thereof, aromatic liquids such as benzene and toluene, and halohydrocarbons such as 1,2-dichloroethane and chlorobenzene. The washing is conveniently effected by suspending the magnesium halide-transition metal composition in the inert liquid hydrocarbon or halohydrocarbon medium and agitating the mixture for a period of time of at least 5 minutes up to 10 hours conveniently 10 minutes up to 5 hours. The number of washing steps used will depend on the quantity of the inert liquid hydrocarbon or halohydrocarbon used in each washing step and the time and temperature of each washing step. The washing step may be effected at ambient temperature but it is preferred that at least one washing step is effected under conditions such that the inert liquid hydrocarbon or halohydrocarbon attains an elevated temperature which is in the range 60°C up to 120°C, and especially at least 80°C.

The at least one washing step is believed to remove some complexes of the transition metal compound and the Lewis Base compound from the magnesium halide-transition metal composition and also to remove any excess unreacted transition metal compound which remains. For the removal of the complexes, it is desirable that the at least one washing step, and particularly at least the first washing step when several washing steps are used, is effected at an elevated temperature of at least 60°C, particularly at

least 80°C. However, if more than one washing step is used, the washing steps after the first step may be effected at a lower temperature. If the liquid medium is separated from the magnesium halide-transition metal composition by a decantation process, or by using a siphon, some unseparated liquid, which typically includes unreacted transition metal compound, remains with the magnesium halide-transition metal composition and if this unreacted transition metal compound is titanium tetrachloride, the proportion thereof can be reduced by washing at ambient temperature.

If the magnesium halide material has been suspended in titanium tetrachloride at an elevated temperature, it is preferred to effect the washing step, or the first washing step, before any substantial cooling has occurred after separating the magnesium halide-transition metal composition from the titanium tetrachloride. Thus, it is preferred to add the inert hydrocarbon or halohydrocarbon liquid to the separated solid magnesium halide-transition metal composition within a few minutes, for example within one to 30 minutes, of removing the titanium tetrachloride. The at least one washing step is conveniently effected in a vessel containing heating means, such as an outer jacket for a heating fluid, and it is preferred to continue heating during the washing step or during at least the first of the washing steps. After the treatment with titanium tetrachloride, the washing may be effected without allowing any appreciable cooling of the separated solid magnesium halide-transition metal composition to occur and adding the inert hydrocarbon or halohydrocarbon liquid at ambient temperature whilst still supplying heat to the solid, and the added liquid. The washing step, or each washing step, is effected by suspending the solid magnesium halide-transition metal composition in the inert hydrocarbon or halohydrocarbon liquid and agitating the

mixture for a period of time which may be from 5 minutes up to 10 hours, and which is preferably from 10 minutes up to 5 hours.

If the solid has been obtained by grinding the magnesium halide material with titanium tetrachloride, or has been separated from a titanium tetrachloride-containing liquid and allowed to cool appreciably, for example to ambient temperature, it is desirable that the at least one washing step, or at least the first washing step, is effected at an elevated temperature of at least 80°C, for example using heptane at reflux temperature, and that the elevated temperature is maintained for at least two hours, in order to ensure that materials which are insoluble at the initial low temperature may be dissolved in the hot inert hydrocarbon or halohydrocarbon liquid.

The quantity of the inert hydrocarbon or halohydrocarbon liquid used for the at least one washing step is conveniently in the range from 5 $cm^3$ to 20 $cm^3$ for each gramme of the transition metal composition, particularly from 8 $cm^3$ to 12 $cm^3$ for each gramme of the magnesium halide-transition metal composition.

If the magnesium halide material is suspended in undiluted titanium tetrachloride, if the washing step, or at least the first washing step, is effected before the separated magnesium halide-transition metal composition has cooled appreciably, for example before the separated magnesium halide-transition metal composition has cooled below 70°C, and if heating is continued throughout the washing, we have found that satisfactory products can be obtained using not more than two washing steps at an elevated temperature of at least 60°C. Using such a procedure, adequate washing may be achieved by agitating the mixture of the separated magnesium halide-transition metal composition and the inert hydrocarbon or halohydrocarbon liquid at the elevated temperature and

continuing the agitation for from 10 minutes up to two hours, typically for 10 minutes up to one hour before either separating the solid from the liquid or allowing the solid to settle. After washing at the elevated temperature, if the liquid is separated by decantation or by using a siphon, further washes may be effected at a lower temperature, typically at ambient temperature, to reduce the proportion of unreacted titanium tetrachloride which remains with the solid magnesium halide-transition metal composition.

After the, or each, washing step, the magnesium halide-transition metal composition may be separated from the liquid phase by filtration, decantation or by means or a siphon. Using a siphon to effect separation of the magnesium halide-transition metal composition from the liquid, we have obtained a satisfactory product by effecting a first washing step at a temperature of about 100°C, a second washing step with the temperature rising to be in the range 35 to 60°C and two further washing steps at essentially ambient temperature.

According to a preferred aspect of the present invention, it is not necessary to remove all of the removable transition metal materials by the optional washing steps. Indeed, we have obtained solid materials which contain a substantial proportion of titanium species which can be removed by continued hot washing (for example at 80°C) with an inert hydrocarbon or halohydrocarbon liquid, and we have found that such solid materials, when used as a catalyst component to polymerise propylene, give a high yield of a polymer having good stereoregularity (more than 90% is insoluble in boiling heptane). We have found that continued hot washing can reduce the titanium content of the final product to below one percent by weight but we prefer that the titanium content of the final product is in the range from 2 up to 4% by weight

and particularly that the titanium content is not below 2.5% by weight. In the preferred magnesium halide-transition metal compositions obtained by the process of the present invention using titanium tetrachloride, a substantial proportion of the titanium, for example at least 25% and possibly in excess of 50%, is capable of being removed by continued hot washing with an inert hydrocarbon or halohydrocarbon liquid. However, in general, the presence of such quantities of extractable titanium species does not detract from the characteristics of the magnesium halide-transition metal composition when used as a component of an olefin polymerisation catalyst which has high activity and high stereospecificity.

The production of the magnesium halide-transition metal composition has been described with particular reference to the use of titanium tetrachloride, which is a liquid under normal conditions of temperature and pressure, but it will be appreciated that other compounds of a transition metal can be used in a generally similar manner. However, using a solid compound of a transition metal, for example titanium trichloride, it is generally more convenient to effect contacting with the magnesium halide by grinding the two materials together.

The magnesium halide composition or the magnesium halide-transition metal composition is typically obtained by a process which includes a grinding step. The product obtained by grinding typically contains a significant proportion, typically at least 10% by weight, of particles of a fine particle size of less than 5 microns. Furthermore, the ground product, in addition to having a poor particle size distribution, also has a particle form which is not ideal for a catalyst component. Since the particle form of the particles of the solid catalyst component may be replicated by the polymer product, for example when polymerising propylene, the particle form,

and in particular the powder flow, of the polymer product will not be ideal. Furthermore, if the polymerisation is effected by a gas phase process, particularly a fluidised bed process, the fine particle size materials will be readily entrained in the circulating gas stream and removed from the polymerisation reactor. This could result in the presence of a highly active catalyst in the circulating gas stream which causes continuing polymerisation with the consequential deposition of polymer in, and possibly blocking of, the circulating gas loop. To minimise these problems, it is desirable to improve the particle form of the solid magnesium halide composition or magnesium halide-transition metal composition which are the products of different aspects of the process of the present invention.

The particle form of the final product may be improved by suspending a solid material in an inert liquid medium, spray-drying the suspension formed and collecting a spray-dried solid material wherein the solid material is the original magnesium halide or a solid obtained in a subsequent stage of the process, including the magnesium halide composition or the magnesium halide-transition metal composition. If magnesium halide is spray-dried, the spray-dried product thus obtained may be contacted thereafter, without grinding, with a liquid phase containing one or more of the other reagents which are to be reacted with the magnesium halide. Thus, a spray-dried magnesium halide may be contacted first with the optional non-metallic halide, then with substituted ester and the Lewis Base compound and thereafter with a liquid phase containing a compound of a transition metal, all of these contacting steps being effecting without grinding.

Thus, as a further aspect of the present invention, a spray-drying step may be incorporated either before the first stage, between two successive stages or after the

final stage of the process hereinbefore described. It is generally preferred to spray dry the solid magnesium halide-transition metal composition.

The spray-drying step can be effected using conventional spray-drying techniques. To effect spray-drying, the suspension is passed through a suitable atomizer which creates a spray or dispersion of droplets of the suspension, a stream of a hot gas is arranged to contact the droplets and cause evaporation of the liquid medium and the solid product which separates is collected. Suitable atomizers for producing the droplets of the suspension include nozzle atomizers and spinning disc atomizers. The inert liquid medium used for the spray-drying may be any liquid medium which does not have a deleterious effect on the characteristics of an olefin polymerisation catalyst system which incorporates the spray dried material. Typically the inert liquid medium is a liquid hydrocarbon such as an aliphatic, aromatic or cycloaliphatic hydrocarbon or a halohydrocarbon such as chlorobenzene, but other materials such as titanium tetrachloride or polar materials such as esters may be used even though such materials are not normally regarded as inert when used in an olefin polymerisation process.

The product obtained by including a spray-drying stage in the process of the present invention typically contains a reduced proportion of fine particulate material and has a particle form which is generally spherical. The product obtained by using a spray-drying stage is suitable for effecting polymerisation in the gas phase.

Spray-drying of suspensions which include a solid component which is, or contains, a compound of a transition metal, is the subject of our European Patent Application Publication No. 0 037 182. Thus, the magnesium halide-transition metal composition, which is a solid containing compound of a transition metal, may be

spray-dried in accordance with European Patent Application Publication No. 0 037 182. However, the spray-drying step may be effected using a product which does not contain a compound of a transition metal, for example the original magnesium halide or the magnesium halide composition, and thereafter effecting the subsequent stages, including the contacting with a compound of a transition metal, using the spray-dried support material. Spray-drying of catalyst supports such as silica, alumina and particularly magnesium halide materials and subsequently contacting the spray-dried support material with a compound of a transition metal is the subject of our European Patent Application Publication No. 0072129.

The various solid materials obtained at different stages of the present invention may include not only fine particles but also some coarser particles having a particle size which exceeds 50 microns. The presence of such coarser parties may cause blocking of a spray-drying apparatus or may result in the spray-dried material containing such coarser particles which have been essentially unaffected by the spray-drying and have an undesirable particle size and/or shape.

As a preliminary stage before spray-drying, a suspension of a solid in a liquid medium may be subjected to mechanical action to cause a reduction in the particle size of the solid material, for example using a ball mill or a device which is suitable for the production of a liquid-liquid emulsion. Such a preliminary stage is described in more detail in our copending European Patent Application Publication No. 0072128. Suitable devices for the production of a liquid - liquid emulsion which can be used are stirrers of the Ultra Turrax type (available from Janke and Kunkel KG IKA Werke) and high shear mixers such as are available from Silverson Machines Limited of Chesham, Buckinghamshire,

England. The procedure of subjecting a suspension to mechanical action may be used at any stage of the present invention and thus-treated suspension is then spray-dried, the spray-dried solid collected and subjected to any remaining stages of the process of the present invention.

If a spray-drying step is included, the spray-dried solid is an agglomerate of smaller particles. In general, in use the spray-dried solid will be subjected to shearing forces due to agitation or being circulated through pipework, and these shearing forces may cause at least some break-down of the spray-dried solid to smaller particles. To minimise such break-down it is preferred to incorporate into the spray-dried solid a material which renders the spray-dried solid more resistant to attrition and which may also assist in the agglomeration of the solid particles during the spray-drying step. For convenience hereafter, such a material will be referred to as an "attrition inhibitor".

The attrition inhibitor is conveniently present during the spray-drying stage and is typically present as a solution in the inert liquid medium in which the solid is suspended. The attrition inhibitor should be such that, or should be used in an amount such that, it does not have an appreciable adverse effect on the activity and stereospecificity of an olefin polymerisation catalyst system which includes a solid material obtained by including a spray-drying step in the process of the present invention. If the material obtained by the use of a spray-drying step is subsequently to be suspended in a liquid medium, the attrition inhibitor preferably should be such as to at least minimise dispersion of the spray-dried solid material into smaller particles in the presence of the liquid medium in which the solid is to be suspended. Hence, the attrition inhibitor is preferably soluble in the liquid medium used for the spray-drying

step but is insoluble, or of low solubility, in any liquid medium in which the solid is suspended after effecting the spray-drying step.

The attrition inhibitor may be, for example, polystyrene, polymethylmethacrylate, polyvinylacetate, atactic polypropylene, or an AB block copolymer for example of t-butylstyrene-styrene. It will be appreciated that not all attrition inhibitors will be equally effective. The use of an attrition inhibitor during the spray-drying of the suspension can result in the spray-dried solid material being in the form of firmer agglomerates than a similar spray-dried solid material obtained without using an attrition inhibitor. The amount of the attrition inhibitor is preferably from 0.5% up to 10% by weight relative to the solid material present in the suspension. The suspension containing the attrition inhibitor is spray-dried, for example in the manner described in our European Patent Application Publication No. 0 037 182.

If a spray-dried magnesium halide is subsequently contacted with reagents such as the substituted ester and the Lewis Base compound, typically this is effected using these reagents in the proportions as hereinbefore described. Conveniently, this subsequent contacting is effected using the reagents as a solution in a suitable inert solvent, such as a hydrocarbon solvent. The contacting is effected at a temperature which is conveniently in the range from ambient temperature up to 100°C, especially up to 60°C. The solution of the reagent or reagents, is preferably separated, at least partially, from the spray-dried magnesium halide and the solid is then suspended in a liquid phase containing a further reagent, such as a compound of a transition metal in the manner hereinbefore described. If desired, the contacting of the spray-dried magnesium halide with reagents such as

the substituted ester and the Lewis Base compound may be additional to a stage of contacting with these reagents which has been effected previously in the process of the present invention. If the magnesium halide is contacted with one, or more, of the reagents in more than one stage, the amount of the reagent used in each stage preferably should not exceed the proportions noted herein for the particular reagent and, especially, the total amount of reagent used in all stages should not exceed the proportions noted herein for that reagent.

We have found that the magnesium halide-transition metal composition obtained by the process of the present invention, with or without the spray-drying step, may be used in combination with organic metal compounds, and preferably Lewis Base compounds, to give a polymerisation catalyst and that this catalyst has a high activity and stereospecificity when used for the polymerisation of alpha-olefin monomers.

According to a further aspect of the present invention there is provided a polymerisation catalyst which comprises

A. a magnesium halide-transition metal composition in accordance with the present invention or produced by a process as hereinbefore described; and

B. An organic compound of aluminium or of a non-transition metal of Group IIA of the Periodic Table, or a complex of an organic compound of a non-transition metal of Group IA or IIA of the Periodic Table together with an organic aluminium compound.

Component A of the catalyst system is preferably a magnesium halide-titanium composition which has been obtained using titanium tetrachloride as the transition metal compound.

Component B of the catalyst system may be an organic magnesium compound or a mixture or complex thereof with an

organic aluminium compound. Alternatively, a complex of a metal of Group IA with an organic aluminium compound may be used, for example, a compound of the type lithium aluminium tetraalkyl. However, it is preferred to use an organic aluminium compound and in particular it is preferred to use a tri-hydrocarbon aluminium compound such as an aluminium trialkyl compound, particularly one in which the alkyl group contains from 1 up to 10 carbon atoms, for example, aluminium triethyl, aluminium tri-isobutyl or aluminium trioctyl.

In addition to Components A and B, it is preferred that the catalyst system includes a Lewis Base compound.

The Lewis Base compound which is used as the additional component can be any organic Lewis Base compound which has been proposed for use in a Ziegler polymerisation catalyst and which affects either the activity or stereospecificity of such a catalyst system. Thus, the Lewis Base compound may be an ether, an ester, a ketone, an alcohol, an ortho-ester, a sulphide (a thioether), an ester of a thiocarboxylic acid (a thioester), a thioketone, a thiol, a sulphone a sulphonamide, a fused ring compound containing a heterocyclic sulphur atom, an organic silicon compound such as a silane or siloxane, an amine, a urea, substituted ureas, thiourea, amines and derivatives thereof, and organic phosphorus compounds.

The Lewis Base component which is used as an additional component of the catalyst system may be a substituted ester or a Lewis Base compound of the type preferred for the production of Component A of the catalyst system. Thus, the Lewis Base component may be an ester of the formula $R^2COOR^3$, where $R^2$ and $R^3$ are as hereinbefore defined. Alternatively, the Lewis Base compound may be a substituted ester such as a dialkyl phthalate or an alkyl ester of 4-methoxybenzoic

acid. Esters which may be used as the additional Lewis Base component of the catalyst system include, for example, diethyl phthalate, ethyl benzoate, butyl benzoate, methyl p-methylbenzoate, ethyl 4-methoxybenzoate and ethyl phenylacetate.

Alternatively, the Lewis Base component may be an organic silicon compound, particularly one containing one or more Si-$OR^4$, Si-$OCOR^4$ or Si-$NR^4$ bonds, where $R^4$ is as hereinbefore defined. Organic silicon compounds which may be used include phenyltriethoxysilane, diphenyldi-isobutoxysilane and iso-butyltriethoxysilane.

In the polymerisation catalyst it is preferred to use at least one mole of the organic metal compound which is Component B for each mole of transition metal which is present in Component A of the catalyst system. In general at least 10 moles of the organic metal compound are used for each mole of transition metal but the proportion of Component B preferably does not exceed 250 moles per mole of transition metal in Component A. Especially preferred proportions of Component B are from 10 up to 60 moles of the organic metal compound for each mole of transition metal.

The preferred catalyst systems also include a Lewis Base compound and the proportion of Lewis Base compound should not exceed the proportion of Component B of the catalyst system. Preferably, when the Lewis Base compound is an ester, there is used from 0.05 up to 0.5 moles, especially from 0.1 up to 0.4 moles, of the ester for each mole of Component B. If the Lewis Base compound is a silicon compound, it is preferred to use 0.02 up to 0.2, for example 0.1, moles of the silicon compound for each mole of component B.

The catalyst system of the present invention may be obtained by pre-mixing Components A, B and optional Component C before introducing the catalyst system into

the polymerisation reactor. Alternatively, all the catalyst components may be introduced separately into the polymerisation reactor. A further alternative procedure is to add Component A of the catalyst system separately and to add Components B and C as a mixture. Our published British Patent Application No. 2 103 626 discloses that if Component B is an aluminium trialkyl and Component C is an ester of a carboxylic acid containing an aromatic group, mixing and storing of these components are preferably effected in the presence of an olefin monomer.

The catalyst systems of the present invention are suitable for the polymerisation or copolymerisation of unsaturated monomers, particularly ethylenically unsaturated hydrocarbon monomers such as the olefin monomers.

As a further aspect of the present invention there is provided a process for the production of a polymer or copolymer of an unsaturated monomer wherein at least one unsaturated hydrocarbon monomer is contacted under polymerisation conditions with a polymerisation catalyst as hereinbefore described.

The monomer which may be used in accordance with the present invention has the formula $CH_2=CHR^5$ wherein $R^5$ is a hydrogen atom or a hydrocarbon radical.

Thus, the monomers which may be polymerised by the process of the present invention include ethylene, propylene, butene-1, pentene-1, hexene-1, 4-methylpentene-1, styrene, 1,3-butadiene or any other monomer having the above formula. The monomer is preferably an olefin monomer, particularly an aliphatic mono-olefin monomer which contains from 2 up to 10 carbon atoms.

The monomers may be homopolymerised or may be copolymerised together. If a copolymerisation is being effected this may be done using a mixture of monomers

which has essentially the same composition throughout the polymerisation process. Alternatively, a sequential polymerisation process, such as described in British patents 970 478 and 970 479 may be used.

The present invention is particularly suitable for the polymerisation of ethylene or propylene, and especially for the polymerisation of propylene in the gas phase.

Thus, as a further aspect of the present invention, there is provided a process for the polymerisation of propylene which comprises contacting gaseous propylene in the substantial absence of any liquid phase with a polymerisation catalyst of the type hereinbefore described.

Using the process of the present invention, it is possible to obtain, as a direct product of polymerisation, a propylene polymer having a titanium content of not more than 7 parts per million by weight, and a chlorine content of less than 150 parts per million by weight. Preferred propylene polymers contain not more than 7%, and especially less than 5%, by weight of polymer which is soluble in boiling heptane.

Preferred polymers have a titanium content of not more than 5 parts per million by weight. Propylene polymers obtained by the present invention can have a chlorine content which is not more than 120 parts per million by weight. The polymer may be formed into mouldings which have a flexural modulus of more than 1.40 $GN/m^2$ and especially at least 1.5 $GN/m^2$. The flexural modulus is determined from the deformation of a test strip at 1% skin strain after 60 seconds at 23°C and 50% relative humidity measured using a cantilever beam apparatus as described in "Polymer Age", March 1970, pages 57 and 58, using a test strip prepared as described in the detail hereafter in Note (e) to Table Two.

The low proportion of polymer which is soluble in boiling heptane and the high flexural modulus both indicate the high stereoregularity of the propylene polymers of the present invention.

If polymerisation is effected in the gas phase, the monomer may be introduced into the polymerisation vessel as a liquid with the conditions of temperature and pressure within the polymerisation vessel being such that a major proportion of the liquid monomer vaporises, thereby giving an evaporative cooling effect, whereby the polymerisation vessel contains a solid phase which is the polymerisation catalyst and the polymer formed thereon and a gaseous monomer phase with only a minor proportion of liquid monomer. Polymerisation in the gas phase may be effected using conditions which are such that the monomer is at a temperature and partial pressure which are close to the dew point temperature and pressure for that monomer, for example, as described in more detail in British patent specification 1 532 445. Polymerisation in the gas phase may be effected using any technique suitable for effecting a gas-solid reaction, such as a fluidised-bed reactor system, a stirred-bed reactor system or a ribbon-blender type of reactor.

It will be appreciated that the catalyst system hereinbefore described is of the type generally known as a Ziegler-Natta type of catalyst system. As is well known, Ziegler-Natta type catalysts are susceptible to the presence of impurities in the polymerisation system. Accordingly, particularly when a high yield of polymer is desired in relation to the transition metal component of the catalyst system, it is desirable to effect the polymerisation using reagents, that is monomer and possibly diluent, which have a high degree of purity, for example, a monomer which contains less than 5 ppm by weight of water and less than 1 ppm by weight of oxygen.

Materials having a high degree of purity can be obtained by processes such as those described in British Patent Specifications 1 111 493, 1 226 659 and 1 383 611.

The polymerisation may be effected either in a batch manner or on a continuous basis. The catalyst components may be introduced into the polymerisation vessel separately. When the monomer is propylene or a higher alpha-olefin monomer, it is preferred that the polymerisation is effected in the presence of a Lewis Base compound.

When carrying out polymerisation on a continuous basis, we have found that particularly useful effects are obtained if the organic metal compound and the Lewis Base compound are pre-mixed just before being introduced into the polymerisation reaction vessel, or if the pre-mixture has been stored in the presence of an olefin monomer.

Thus, as a preferred aspect of the present invention, polymerisation is carried out on a continuous basis using a catalyst system including a Lewis Base compound, the catalyst components are introduced into the intermittently, and Component B and the Lewis Base compound either a) are mixed together not more than one hour before being introduced into the polymerisation medium, or b) are mixed together and stored in the presence of an olefin monomer until introduced into the polymerisation medium.

The polymerisation can be effected in the presence of a chain transfer agent such as hydrogen in order to control the molecular weight of the polymer product. The proportion of chain transfer agent used will be dependent on the polymerisation conditions and on the particular monomer or monomer mixture which is being polymerised. Using hydrogen in the polymerisation of propylene, it is preferred to use hydrogen in an amount of from 0.01 up to 5.0%, particularly from 0.05 up to 2.0% molar relative to

the monomer. However, when the monomer being polymerised is ethylene, or a mixture in which ethylene is a major polymerisable component (by moles), the amount of hydrogen used is typically much greater, for example, in the homopolymerisation of ethylene the reaction mixture may contain in excess of 50% molar of hydrogen, whereas if ethylene is being copolymerised, the proportion of hydrogen used is typically up to 35% molar of the total reaction mixture.

The polymerisation can be effected under any conditions which have been previously proposed for effecting the polymerisation of olefin monomers. Thus, ethylene polymerisation may be effected at pressures of up to 3000 $kg/cm^2$, and at such pressures the polymerisation temperature may be as high as 300°C. However, it is preferred to carry out the polymerisation at comparatively low pressures and temperatures, particularly for the production of polymers of the higher olefins (including propylene) which have a high stereoregularity. More specifically, the polymerisation is effected at pressures which are conveniently in the range from 1 up to 100 $kg/cm^2$, preferably at a pressure of up to 50 $kg/cm^2$ and especially at pressures in the range from 5 up to 40 $kg/cm^2$.

The polymerisation temperature used will be dependent in part on the particular polymerisation technique being used. Thus, it is possible to use polymerisation temperatures in excess of the melting point of the polymer and such conditions may be used in the polymerisation, or copolymerisation, of ethylene in the presence of a hydrocarbon liquid which can act as a solvent for the polymer formed. However, in general, it is preferred to use temperatures below the melting temperature of the polymer formed and in particular it is preferred to use temperatures of not more than 100°C. The polymerisation

temperature is typically in the range from 40°C up to 100°C.

It is generally preferred to effect all stages in the preparation of the magnesium halide composition, and especially in the preparation of the transition metal composition, in an inert atmosphere which is essentially free from oxygen-containing impurities such as water vapour. Very preferably the polymerisation process of the present invention should also be effected in the essential absence of such impurities since these can have a harmful effect on the polymerisation process.

Apparatus suitable for effecting the optional spray-drying step is shown in the accompanying drawings wherein:-

in Figure 1 there is given a cross-sectional elevation of a typical spray-drying apparatus which can be used to perform the optional spray-drying step; and

in Figure 2 there is given a cross-sectional elevation of an alternative apparatus with an atomising nozzle.

In Figure 1, a gas-tight spray-drying vessel 1 comprises an upper cylindrical section 2 and a lower, generally conical section 3. The upper section 2 is provided with a cover plate 4.

A disc 5 mounted on the end of an output shaft 6 of a high speed gear box/motor assembly 7 is located near the top of the vessel. The disc 5 consists of two plates 8 and 9 between which are secured a series of radial vanes 10. A chamber 11 surrounds the drive shaft 6 and extends to the upper plate 8 of the disc 5. The plate 8 is provided with a central opening indicated at 12.

A plenum chamber 13, which is mounted on the cover plate 4, surrounds the chamber 11. The plenum chamber 13, communicates with the vessel 1 through an annular opening 14 between a central opening in the cover plate 4 and the

downward extension of the chamber 11.

A conduit 15 is connected to the chamber 11 and also to a source (not shown) of a suspension containing a solid material. A conduit 16 is connected to the plenum chamber 13 and also to a source (not shown) of a heated inert gas.

Near the bottom of the vessel 1 is located a conduit 17 which passes out of vessel 1 through the side of the conical section 3. A conduit 18, in which is located a valve means 19, is connected to the bottom of the conical section 3 and is also connected to a hopper (not shown) for storing dry solid.

In operation, the disc 5 is rotated at a high speed in the range from 500 up to 25,000 rpm. A suspension containing a solid material and an inert liquid medium, for example a solid titanium composition obtained in accordance with the present invention suspended in toluene, is passed through the conduit 15 and chamber 11 into the space between the plates 8 and 9 of the disc 5. The high speed of rotation of the disc 5, and the vanes 10, cause the suspension to pass to the periphery of the disc 5 from which the suspension is flung off as a spray of droplets.

A hot inert gas is passed through the conduit 16, plenum chamber 13 and the annular opening 14 to flow round the rotating disc 5. The hot inert gas causes evaporation of the liquid medium from the droplets of the suspension.

The inert gas containing the vaporised liquid medium and some entrained spray-dried solid, passes out of the vessel 1 through the conduit 17. The major portion of the spray-dried solid collects at the bottom of the conical section 3 from which it is withdrawn through the conduit 18 by operation of the valve means 19.

The inert gas passing through the conduit 17 may be passed to a cyclone (not shown) to recover entrained

solid, then to a condenser (not shown) to recover the liquid vapour and finally to a re-heater (not shown). The reheated inert gas is then recirculated to the conduit 16. The spray-dried solid passing through the conduit 18 is passed to a storage hopper (not shown).

The inert gas passed through the conduit 16 is conveniently nitrogen at a temperature in the range 130 to 150°C.

The apparatus shown in Figure 2 is essentially the same as that shown in Figure 1 with the exception that the disc atomizer is replaced by an atomizer nozzle. In Figure 2, the corresponding parts are indicated by the same reference numbers as in Figure 1. An atomizer nozzle 20 is located within the plenum chamber 13. The atomizer nozzle 20 contains an inner conduit 15A and an outer conduit 21. The conduit 15A is a continuation of conduit 15, which is connected to a source (not shown) of a suspension containing a transition metal composition. Conduit 21 is connected to a source (not shown) of an inert gas. The conduits 15A and 21 are essentially coaxial and are tapered at their lower ends. The nozzle 20 is provided at its lower end with an orifice 22 formed by openings in both of conduits 15A and 21.

In operation, the gas flow through the conduit 21 draws the suspension through the conduits 15 and 15A. The gas and the suspension pass through the orifice 22 and form a spray of droplets. Hot inert gas which passes through conduit 16, plenum chamber 13 and opening 14, flows past the orifice 22 and causes evaporation of the liquid medium from the droplets of the suspension. The spray-dried solid is then recovered in the manner described in respect of the apparatus of Figure 1.

Various aspects of the present invention will now be described with reference to the following Examples which are illustrative of the invention. In the Examples, all

operations are effected under an atmosphere of essentially oxygen- and water-free nitrogen unless otherwise indicated. All the glass apparatus was dried in air oven at 120°C for at least one hour and purged with nitrogen before use.

In the propylene polymerisation examples, the propylene used for the polymerisation had been purified further by passing gaseous propylene of commercial purity through a column containing granules of Alcoa F1 alumina at ambient temperature.

Examples 1 to 3 illustrate the preparation of a magnesium chloride composition in accordance with the process of the present invention.

EXAMPLE 1

A Siebtechnik SM10 Vibromill having a total volume of about 38 $dm^3$ and containing 119 kg of stainless steel balls of 25 mm diameter was sealed and purged with nitrogen, to give an atmosphere of nitrogen in the mill. The mill was vibrated at a frequency of 1500 oscillations per minute and an amplitude of 2 mm. Two kilogrammes of essentially anhydrous magnesium chloride (BDH technical grade) were introduced into the mill whilst the mill was being vibrated. After the addition of the magnesium chloride, the mill was vibrated for about 30 minutes and 100 $cm^3$ of thionyl chloride were added to the vibrating mill. The mill was then vibrated for a further 24 hours whilst maintaining the temperature in the range 50 to 60°C by the intermittent passage of a mixture of water and ethylene glycol at 0°C through the jacket of the mill.

After 24 hours, 350 $cm^3$ of ethyl 4-methoxybenzoate were added to the vibrating mill over a period of about 30 minutes and vibration of the mill was continued for a further 24 hours at 50 to 60°C. One $dm^3$ of ethyl benzoate was then added and milling was continued for a further 24 hours at 50 to 60°C. The mill was cooled to

10°C by the continuous passage of the cold ethylene glycol/water mixture through the jacket of the mill. Milling was effected at 10°C for a further 24 hours and the magnesium chloride composition was collected. The proportion of ethyl 4-methoxybenzoate was about 1:10 molar relative to the magnesium chloride whilst the proportion of the ethyl benzoate was 1:3 molar relative to the magnesium chloride.

EXAMPLE 2

The procedure of Example 1 was repeated with the exception that only 750 $cm^3$ of ethyl benzoate were used, thus giving a molar ratio, ethyl benzoate to magnesium chloride, of 1:4.

EXAMPLE 3

The procedure of Example 1 was repeated with the changes noted hereafter.

1.66 kilogrammes of essentially anhydrous magnesium chloride (obtained from Norsk Hydro and containing 2% by weight of water) and 140 $cm^3$ of thionyl chloride were added to the mill at the start of milling. 150 $cm^3$ of ethyl 4-methoxy benzoate were added after 24 hours of milling and 500 $cm^3$ of ethyl benzoate after milling for a further 24 hours. In this procedure, the proportion of ethyl-4-methoxybenzoate was 1:19 molar relative to the magnesium chloride and the proportion of ethyl benzoate was 1:5 molar relative to the magnesium chloride.

Examples 4 to 7 illustrate the use of the magnesium chloride compositions of Examples 1 to 3 to prepare titanium compositions according to a further aspect of the present invention.

EXAMPLE 4

A) Contacting with titanium tetrachloride

340 grammes of the milled product of Example 1 were transferred to a jacketted glass vessel provided with a stirrer and having a capacity of 6 $dm^3$. Four $dm^3$ of

titanium tetrachloride were added to the vessel, the stirrer was started and heating applied to the jacket. Heating was continued until a temperature of 100°C was attained. The temperature was maintained at 100°C and stirring was continued, for three hours. At the end of three hours, the stirrer was stopped, but heating was continued and the solid was allowed to settle over a period of two hours. The supernatant liquid was siphoned off from the settled solid, heating was terminated and the contents of the vessel were allowed to cool by standing for 16 hours. The treatment with titanium tetrachloride was then repeated using the residue from the first treatment.

B) Washing

To the cold residue remaining from stage A) were added 5 $dm^3$ of a heptane fraction containing heptane isomers of which about 35% by weight was n-heptane (hereafter this mixture is referred to simply as the "heptane" fraction). The mixture was stirred and heated up to 100°C. Stirring at 100°C was contined for one hour and the stirrer was then stopped. After a further three hours, the supernatant liquid was siphoned off from the settled solid which was allowed to stand overnight without heating.

To the cold residue were added 5.2 $dm^3$ of the heptane fraction at ambient temperature. The mixture was stirred and heated up to 100°C. The temperature of 100°C was maintained for one hour with stirring. The stirrer was switched off and the solid allowed to settle whilst still maintaining the temperature. After 1.75 hours the supernatant liquid was siphoned off from the settled solid and heating was ceased.

To the hot residue remaining from the previous washing step were added 5.2 $dm^3$ of the heptane fraction at ambient temperature. The mixture was stirred for 15

minutes without heating, the stirrer was switched off and the solid allowed to settle overnight.

The supernatant liquid was siphoned off from the settled solid of the previous washing step. The cold residue was washed once more using the procedure as described for the previous washing stage with the exception that the solid was allowed to settle for 4.25 hours only. The residue, after separating the supernatant liquid, was finally diluted with the heptane fraction at ambient temperature to give a final volume of 1.6 $dm^3$ and the mixture was transferred to a 2 $dm^3$ storage vessel under nitrogen.

A sample (5 $cm^3$) of the mixture obtained was treated with 2N sulphuric acid and the aqueous layer subjected to spectrophotometric analysis. From the analysis, it was deduced that the solid component had a titanium content of 2.4% by weight.

EXAMPLE 5

The procedure of Example 4 was repeated with the changes noted hereafter.

In stage A), 260 grammes of the product of Example 1 were used and were treated, once only with titanium tetrachloride. 3.5 $dm^3$ of titanium tetrachloride were used.

In stage B), the first washing stage was effected by heating the residue from stage A) to 100°C, with stirring, adding 5 $dm^3$ of the heptane fraction and continuing to heat and stir until a temperature of 100°C was once more attained. The subsequent washing procedure was generally as described in stage B) of Example 4 with the exceptions that in the second washing stage, 5 $dm^3$ of the heptane fraction were used, and in the last two washing stages 5.3 $dm^3$ of the heptane fraction were used. After washing, sufficient of the heptane fraction was added to give a final volume of 1.5 $dm^3$.

From the analysis, it was deduced that the solid component had a titanium content of 3.2% by weight.

EXAMPLE 6

The procedure of Example 4 was repeated with the changes noted hereafter.

In stage A), 225 grammes of the product of Example 2 were used and were treated, once only, with titanium tetrachloride. In the treatment with titanium tetrachloride, 5 $dm^3$ of titanium tetrachloride were used and stirring at 100°C was continued for 3.5 hours.

In stage B), each washing stage was effected using 5.5 $dm^3$ of the heptane fraction.

By analysis the solid product was found to contain 2.7% by weight of titanium.

EXAMPLE 7

The procedure of Example 4 was carried out with the changes noted hereafter.

In stage A), 240 grammes of the product of Example 3 were used and were treated, once only, with titanium tetrachloride. Five $dm^3$ of titanium tetrachloride were used.

In stage B), six $dm^3$ of the heptane fraction were used for each washing step. The mixture was allowed to settle for 45 minutes in the first washing step. After removing the supernatant liquid at the end of the first washing step, and whilst continuing to heat, 6 $dm^3$ of the heptane fraction (at ambient temperature) were added to effect the second hot washing step. The mixture was allowed to settle for one hour, the supernatant liquid was siphoned off, heating was stopped and 6 $dm^3$ of the heptane fraction were added. The mixture was stirred for 15 minutes and allowed to settle and cool overnight.

The supernatant liquid was siphoned off and 6 $dm^3$ of the heptane fraction were used for the final cold wash. The settled solid was diluted to a final volume of 1.2

$dm^3$. By analysis, it was deduced that the solid product had a titanium content of 2.3% by weight.

EXAMPLE 8

A portion of the product of Example 4 was dispersed and spray dried as described hereafter in stages A) and B).

A) Dispersing titanium-containing composition

A portion of the product of Example 4, containing about 130 g of solid, was allowed to settle, the supernatant liquid was siphoned off and replaced by a sufficient quantity of toluene to give a final total volume of 450 $cm^3$. A 10% weight/volume solution of polystyrene ('Styron' 686/7 - available from Dow Chemical Company) in toluene was added in a quantity sufficient to provide 2% by weight of polystyrene relative to the solid.

The mixture produced was introduced into a one $dm^3$ three-necked glass flask having a heating/cooling jacket and fitted with a high shear homogeniser of the Ultra Turrax T45 type (available from Janke and Kunkel KG IKA Werke). Water at ambient temperature was passed through the heating/cooling jacket. The mixture was then subjected simultaneously to vigorous agitation and shearing by operating the homogeniser for three minutes at maximum power (an initial rate of stirring of 10,000 rpm). During the agitation and shearing, the temperature of the mixture rose but did not exceed 50°C.

The dispersion was then transferred to a storage vessel (a 2 $dm^3$ three-necked glass flask fitted with a stirrer), and stirred until spray-dried in stage B).

B) Spray drying of dispersion

The dispersion obtained in stage A) was spray dried using a glass laboratory scale spray-drying apparatus similar to that illustrated in Figure 2 of the accompanying drawings. The spray-drying apparatus had a

diameter of 15 cm, a length of 0.7 metres and a generally hemispherical bottom section. A conduit from the bottom section was connected directly to a cyclone provided with a catch-pot in which the solid material was collected. A spray nozzle was located at the top of the apparatus and this was a 1/4 JAU Automatic Air Atomizing Nozzle obtained from Spraying Systems Co. of the USA and having a 0.72 mm diameter nozzle.

Spraying was effected under nitrogen by passing a stream of nitrogen, preheated to a temperature of 140 to 145°C into the spray-drying apparatus at a rate of 190 $dm^3$/minute. Nitrogen at a pressure of about 0.6 $kg/cm^2$ gauge was introduced into the spray nozzle. The suspension obtained in stage B) was fed from the 5 $dm^3$ three-necked glass flask to the spray nozzle by the application of an excess nitrogen pressure of 0.15 $kg/cm^2$ to this flask.

EXAMPLES 9 TO 20

Propylene was polymerised continuously in the gas phase as described hereafter. To initiate the polymerisation, the reaction vessel initially contained about 3.5 kg of polypropylene powder having a flexural modulus of 1.45 $GN/m^2$, and containing 4% by weight of polymer soluble in the heptane fraction by Soxhlet extraction for 24 hours.

Polymerisation was effected in a 25 $dm^3$ stainless steel autoclave fitted with a stirrer and having a heating jacket. Initially, the polypropylene powder was placed in the autoclave. The pressure was reduced to 75 millibars and then nitrogen was added to a pressure of one bar, this procedure being carried out a total of three times. The stirrer was rotated at 60 rpm and stirring was continued throughout the following procedure. The autoclave was heated up to 80°C and then evacuated to a pressure of 75 millibars. Liquid

propylene was added to the autoclave and vaporised to raise the pressure to 28 $kg/cm^2$ gauge. Hydrogen was added separately in the proportion of 1.5% by weight relative to the propylene.

Equal volumes of a 1.5 M solution of tri-isobutyl aluminium in an aliphatic hydrocarbon diluent consisting essentially of dodecane isomers and having a boiling point in the range 170 to 185°C (hereafter referred to simply as the "aliphatic hydrocarbon") and a 0.6 M solution of methyl 4-methylbenzoate in the aliphatic hydrocarbon were mixed together under propylene at 1 $kg/cm^2$ pressure and ambient temperature and stored under propylene until required. This mixture was added to the autoclave. A suspension in the heptane fraction (the aliphatic hydrocarbon was used with the product of Example 8) containing a titanium composition obtained by the process of one of Examples 4 to 8 and having a solids content of about 50% by weight was also introduced into the autoclave. The mixture of the aluminium compound and the ester, and the suspension of the titanium composition were added until polymerisation was observed to start. Liquid propylene was being introduced, and gaseous propylene vented off, whilst the catalyst was being added.

Once polymerisation had started, venting of the autoclave was stopped, liquid propylene at 20°C was introduced into the autoclave at a rate to maintain a pressure of 28 $kg/cm^2$ gauge, (about 3 kg/hr for a dwell time of 1.5 hours) and polypropylene, saturated with propylene, was intermittently withdrawn from the autoclave at a desired rate, typically about 2.5 kg of polymer per hour. The temperature and pressure were maintained at 70°C and 28 $kg/cm^2$ gauge respectively. The mixture of the trialkyl aluminium compound and the ester was continuously introduced into the autoclave at a rate corresponding to 21 millimoles per hour of the aluminium

compound. The suspension of the titanium composition was continuously introduced into the autoclave at the rates set out in Table One hereafter.

The rate of adding the suspension of the titanium composition was adjusted to maintain the rate of polymer production at the desired rate. During the operation of the autoclave, the nature of the titanium composition was changed and operation of the autoclave was continued using various different titanium compositions.

Further details of the polymerisation conditions are set out in Table One. Properties of the polymer products removed at various times during the polymerisations are set out in Table Two.

Table One

| Example | Ti composition | | DT (hours) (b) |
|---|---|---|---|
| | Type (a) | Amount (mM/h) | |
| 9 | 4 | 0.40 | 1.1 |
| 10 | 4 | 0.34 | 1.1 |
| 11 | 4 | 0.28 | 1.3 |
| 12 | 5 | 0.26 | 1.7 |
| 13 | 5 | 0.36 | 1.2 |
| 14 | 6 | 0.45 | 1.1 |
| 15 | 6 | 0.44 | 1.2 |
| 16 | 7 | 0.28 | 1.3 |
| 17 | 7 | 0.49 | 0.9 |
| 18 | 7 | 0.36 | 1.2 |
| 19 | 8 | 0.36 | 1.4 |
| 20 | 8 | 0.44 | 1.2 |

Notes to Table One

(a) Type refers to the Example in which the production of the titanium composition is described.

(b) DT is dwell time and corresponds to:

$$\frac{\text{Average weight of polymer bed}}{\text{Weight of polymer removed per hour}}$$

Table Two

| Example | Time (hours) (c) | Polymer properties | | | | | |
|---|---|---|---|---|---|---|---|
| | | MFI (d) | FM (e) | Ti (f) | Al (f) | Cl (f) | HHS (%) (h) |
| 9 | 8 | 3.0 | 1.41 | 6 | 149 | 110 | ND |
| 10 | 10 | 3.7 | 1.47 | 5 | 141 | 112 | 6.1 |
| 11 | 12 | 4.1 | 1.41 | 5 | 129 | 100 | 7.4 |
| 12 | 10 | 1.9 | 1.51 | 6 | 189 | 126 | 3.3 |
| 13 | 12 | 2.0 | 1.53 | 6 | 178 | 121 | 4.0 |
| 14 | 8 | 1.8 | 1.47 | 7 | 136 | 132 | 5.1 |
| 15 | 10 | 2.3 | 1.50 | 7 | 125 | 129 | 5.2 |
| 16 | 11 | 2.2 | 1.55 | 5 | 148 | 138 | 5.7 |
| 17 | 13 | 5.7 | 1.57 | 6 | 119 | 130 | ND |
| 18 | 15 | 1.7 | 1.55 | 6 | 166 | 124 | 5.4 |
| 19 | 3.5 | 2.0 | 1.49 | 7 | 175 | 182 | 5.6 |
| 20 | 5.5 | 1.6 | 1.42 | 7 | 160 | 185 | 5.2 |

Notes to Table Two

(c) The time is the time, in hours, from the commencement of using the specified catalyst system under the specified operating conditions.

(d) MFI is the melt flow index measured by ASTM Test Method D 1238/70, using a temperature of 230°C and a weight of 2.16 kg.

(e) FM is the flexural modulus expressed in $GN/m^2$. The

flexural modulus was measured using a cantilever beam apparatus as described in Polymer Age, March 1970, pages 57 and 58. The deformation of a test strip at 1% skin strain after 60 seconds at 23°C and 50% relative humidity was measured. The test strip which had dimensions of approximately 150 x 19 x 1.6 mm, was prepared in the following manner.

23 g of the polymer were mixed with 0.1% by weight of an antioxidant ('Topanol' CA), and the mixture was added to a Brabender Plasticiser, at 190°C, 30 rpm and under a load of 10 kg to convert it to a crepe. The crepe was placed within a template, between aluminium foil and pressed by means of an electric Tangye press at a temperature of 250°C. The pressing was pre-heated for a period of 6 minutes, under just enough pressure to make the polymer flow across the template, that is an applied force of about 1 tonne. After the pre-heat period, the applied force was raised to 15 tonnes in 5 tonne increments, degassing (that is releasing pressure) every 5 tonnes. After 2 minutes at 15 tonnes, the press was cooled by means of air and water for 10 minutes or until room temperature was reached. The plaque obtained was then cut into strips of dimensions 150 x 19 x 1.6 mm. Duplicate strips of each polymer were placed into an annealing oven at 130°C and after 2 hours at this temperature the heat was switched off and the oven cooled to ambient temperature at 15°C per hour.

(f) The titanium (Ti), aluminium (Al) and chlorine (Cl) residues from the catalyst are given in parts per million by weight relative to the total polymer product (polymer + catalyst residues) and were measured by X-ray fluorescence on compression moulded discs.

(h) HHS is the proportion by weight of the polymer which is soluble in boiling heptane as determined from the weight loss of a sample of polymer after Soxhlet extraction with the heptane fraction for 24 hours.

ND indicates that this property was not determined.

EXAMPLE 21

The procedure of Example 3 was repeated with the changes noted hereafter.

2.4 kilogrammes of anhydrous magnesium chloride (Norsk Hydro), and 150 $cm^3$ of thionyl chloride were added to the mill at the start of milling. 150 $cm^3$ of ethyl-4-methoxybenzoate were added after 24 hours milling and 600 $cm^3$ of ethyl benzoate after milling for a further 24 hours.

In this procedure, the proportion of ethyl-4-methoxybenzoate was about 1:27.5 molar relative to the magnesium chloride and the proportion of ethyl benzoate was 1:6 molar relative to the magnesium chloride.

EXAMPLE 22

The procedure of Example 5 was repeated with the changes noted hereafter to treat six separate portions of the product of Example 21.

In each stage A), 250 grammes of the products of Example 21 were used and were treated with 5 $dm^3$ of titanium tetrachloride. The product was allowed to settle overnight whilst continuing to heat.

In each stage R), the supernatant liquid was siphoned from the hot mixture and 5 $dm^3$ of the heptane fraction were added. The mixture was stirred at 100°C for 1.5 hours, allowed to settle for two hours, the supernatant liquid was siphoned off and 5 $dm^3$ of the heptane fraction were added. The

mixture was allowed to cool overnight.

The mixture was subsequently heated to 100°C with stirring and the subsequent washing procedure was similar to that described with the exception that in the last two washing stages 5 $dm^3$ of the heptane fraction were used and, after washing, sufficient heptane was added to give a final volume of one $dm^3$.

The suspensions obtained from the six treatments were combined.

EXAMPLES 23 to 25

Propylene was polymerised continuously in the gas phase using a procedure similar to that described in Examples 9 to 20, but using a larger reaction vessel.

Polymerisation was effected in a stainless steel autoclave fitted with a stirrer and having a heating jacket and with a working capacity of 0.8 $M^3$. The vessel contained about 105 kg of polymer powder.

Once polymerisation had commenced, the solution of tri-isobutyl aluminium in the aliphatic hydrocarbon was introduced into the autoclave at a rate of 200 $cm^3$ per hour and the solution of methyl 4-methylbenzoate in the aliphatic hydrocarbon was introduced seperately into the autoclave, also at a rate of 200 $cm^3$ per hour. The temperature and pressure were maintained at 72°C and 28 $kg/cm^2$ gauge respectively. Hydrogen was added in the proportion of 1.2% by weight relative to the propylene. Polypropylene, saturated with propylene was intermittently withdrawn from the autoclave at a rate to give a dwell time of about 1.75 hours (about 60kg per hour of polymer was withdrawn).

A suspension in the heptane fraction of the combined product of Example 22 was introduced into the autoclave at a rate to maintain the desired rate of polymerisation (that is dwell time).

The polymer removed from the autoclave was treated

with a 10% by volume solution of propylene oxide in distilled water to reduce the level of residual chlorine in the polymer. This treatment was effected by adding 3 $dm^3$ of the propylene oxide solution to 240 kg of polymer, which was in a stirred powder bed through which warm nitrogen was being passed. A sample of polymer was also obtained without being subjected to the propylene oxide/water treatment.

Further details of the polymerisation conditions and the properties of the polymers obtained are set out in Table Three.

TABLE 3

| Example | Amount Ti (mM/hr) | Time (hours) (c) | Polymer properties | | | | | |
|---|---|---|---|---|---|---|---|---|
| | | | MFI (d) | FM (e) | Ti (f) | Al (f) | Cl (f) | HHS (%) (h) |
| 23 | 6 | 75 | 2.5 | 1.54 | 5* | 161* | 24* | 5.3 |
| 24 | 5 | 98 | 3.0 | 1.49 | 4* | 147* | 23* | 6.0 |
| 25 | 6 | 115 | 3.2 | 1.49 | 5* | 156 | 115 | 6.0 |

Notes to Table Three

(c) to (f) and (h) are all defined in Notes to Table Two.
(i) * indicates measured on a polymer which had been subjected to treatment with propylene oxide and water.

CLAIMS

1. A magnesium halide composition which includes:

a) at least one compound of the formula

$$(RO)_nAr(COOR^1)_m$$

and,

b) at least one organic Lewis Base compound which is other than a compound of the formula

$$(RO)_nAr(COOR^1)_m$$

wherein

Ar is a residue of an aromatic hydrocarbon or an aromatic halohydrocarbon;

R is a hydrocarbon radical or a halohydrocarbon radical;

$R^1$ is hydrogen, a hydrocarbon radical or a halohydrocarbon radical;

m is an integer;

n is 0 or an integer; and

(m+n) has a value of at least two.

2. A composition as claimed in claim 1 wherein there is present 0.01 up to 0.2 moles of $(RO)_nAr(COOR^1)_m$, and 0.02 up to 1 mole of the at least one organic Lewis Base compound which is component b), for each mole of magnesium halide.

3. A composition as claimed in claim 1 or claim 2 wherein the magnesium halide is a magnesium chloride, the compound $(RO)_nAr(COOR^1)_m$ is ethyl 4-methoxybenzoate and component b) is ethyl benzoate.

4. A composition as claimed in any one of claims 1 to 3 which also includes a compound of the formula

$$AO_aX_{(b-2a)}$$

wherein

A is a non-metallic element, other than oxygen, of Group IV to VI of the Periodic Table;

X is a halogen atom;

a has a value of 1 or 2 and the value of 2a is less than the valency of A; and

b is equal to the valency of A.

5. A process for the production of a magnesium halide composition which comprises contacting a magnesium halide with a) at least one compound of the formula

$$(RO)_nAr(COOR^1)_m$$

and b) at least one organic Lewis Base compound which is other than a compound of the formula

$$(RO)_nAr(COOR^1)_m$$

wherein

Ar is a residue of an aromatic hydrocarbon or an aromatic halohydrocarbon;

R is a hydrocarbon radical or a halohydrocarbon radical;

$R^1$ is hydrogen, a hydrocarbon radical or a halohydrocarbon radical;

m is an integer;

n is 0 or an integer; and

(m+n) has a value of at least two.

6. A process as claimed in claim 5 wherein the magnesium halide is also contacted with at least one compound of the formula

$$AO_aX_{(b-2a)}$$

wherein

A is a non-metallic element, other than oxygen, of

Group IV to VI of the Periodic Table;

X is a halogen atom;

a has a value of 1 or 2 and the value of 2a is less than the valency of A; and

b is equal to the valency of A.

7. A process as claimed in claims 5 or claim 6 wherein contacting is effected by grinding together magnesium halide, the compound $(RO)_nAr(COOR^1)_m$, component b) and, if present, the at least one compound of the formula

$$AO_aX_{(b-2a)}.$$

8. A magnesium halide-transition metal composition which contains a) a magnesium halide, b) a compound of a transition metal of Groups IVA to VIA of the Periodic Table; c) at least one compound of the formula

$$(RO)_nAr(COOR^1)_m$$

and d) at least one organic Lewis Base compound which is other than a compound of the formula

$$(RO)_nAr(COOR^1)_m$$

wherein

Ar is a residue of an aromatic hydrocarbon or an aromatic halohydrocarbon;

R is a hydrocarbon radical or a halohydrocarbon radical;

$R^1$ is hydrogen, a hydrocarbon radical or a halohydrocarbon radical;

m is an integer;

n is 0 or an integer; and

(m+n) has a value of at least two.

9. A process for the production of a magnesium halide-transition metal composition which comprises including an additional step in the process of any one of claims 5 to 8 wherein such additional step comprises contacting a magnesium halide material with a compound of a transition metal of Groups IVA to VIA of the Periodic Table.

10. A process for the production of a magnesium halide composition or a magnesium halide-transition metal composition wherein a spray-drying step is included in the process of any one of claims 5 to 8 or in the process of claim 9.

11. A polymerisation catalyst which comprises:

a) A magnesium halide-transition metal composition as claimed in claim 8 or as obtained by the process of claim 9; and

b) an organic compound of aluminium or of a non-transition metal of Group IIA of the Periodic Table, or a complex of an organic compound of a non-transition metal of Group IA or IIA of the Periodic Table together with an organic aluminium compound.

12. A process for the production of a polymer or copolymer of an unsaturated monomer wherein at least one unsaturated hydrocarbon monomer is contacted under polymerisation conditions with a polymerisation catalyst as claimed in claim 11.

AUSTRIAN CLAIMS

1. A process for the production of a magnesium halide composition which comprises contacting a magnesium halide with a) at least one compound of the formula

$$(RO)_nAr(COOR^1)_m$$

and b) at least one organic Lewis Base compound which is other than a compound of the formula

$$(RO)_nAr(COOR^1)_m$$

wherein

Ar is a residue of an aromatic hydrocarbon or an aromatic halohydrocarbon;

R is a hydrocarbon radical or a halohydrocarbon radical;

$R^1$ is hydrogen, a hydrocarbon radical or a halohydrocarbon radical;

m is an integer;

n is 0 or an integer; and

(m+n) has a value of at least two.

2. A process as claimed in claim 1 wherein $(RO)_nAr(COOR^1)_m$ is ethyl 4-methoxybenzoate and component b) is ethyl benzoate.

3. A process as claimed in claim 1 or claim 2 wherein the magnesium halide is also contacted with at least one compound of the formula

$$AO_aX_{(b-2a)}$$

wherein

A is a non-metallic element, other than oxygen, of Group IV to VI of the Periodic Table;

X is a halogen atom;

a has a value of 1 or 2 and the value of 2a is less

than the valency of A; and

b is equal to the valency of A.

4. A process as claimed in any one of claims 1 to 3 wherein contacting is effected by grinding together magnesium halide, the compound $(RO)_nAr(COOR^1)_m$, component b) and, if present, the at least one compound of the formula

$$AO_aX_{(b-2a)}.$$

5. A process for the production of a magnesium halide-transition metal composition which comprises including an additional step in the process of any one of claims 1 to 4 wherein such additional step comprises contacting a magnesium halide material with a compound of a transition metal of Groups IVA to VIA of the Periodic Table.

6. A process as claimed in claim 5 wherein the contacting with a compound of a transition metal is effected after effecting the process of any one of claims 1 to 4.

7. A process for the production of a magnesium halide composition or a magnesium halide-transition metal composition wherein a spray-drying step is included in the process of any one of claims 1 to 6.

8. A polymerisation catalyst which comprises:

a) A magnesium halide-transition metal composition as obtained by the process of claim 6; and

b) an organic compound of aluminium or of a non-transition metal of Group IIA of the Periodic Table, or a complex of an organic compound of a non-transition metal of Group IA or IIA of the Periodic Table together with an organic aluminium compound.

9. A process for the production of a polymer or

copolymer of an unsaturated monomer wherein at least one unsaturated hydrocarbon monomer is contacted, under polymerisation conditions, with a polymerisation catalyst as claimed in claim 8.

0113960

1/2

Fig.1.

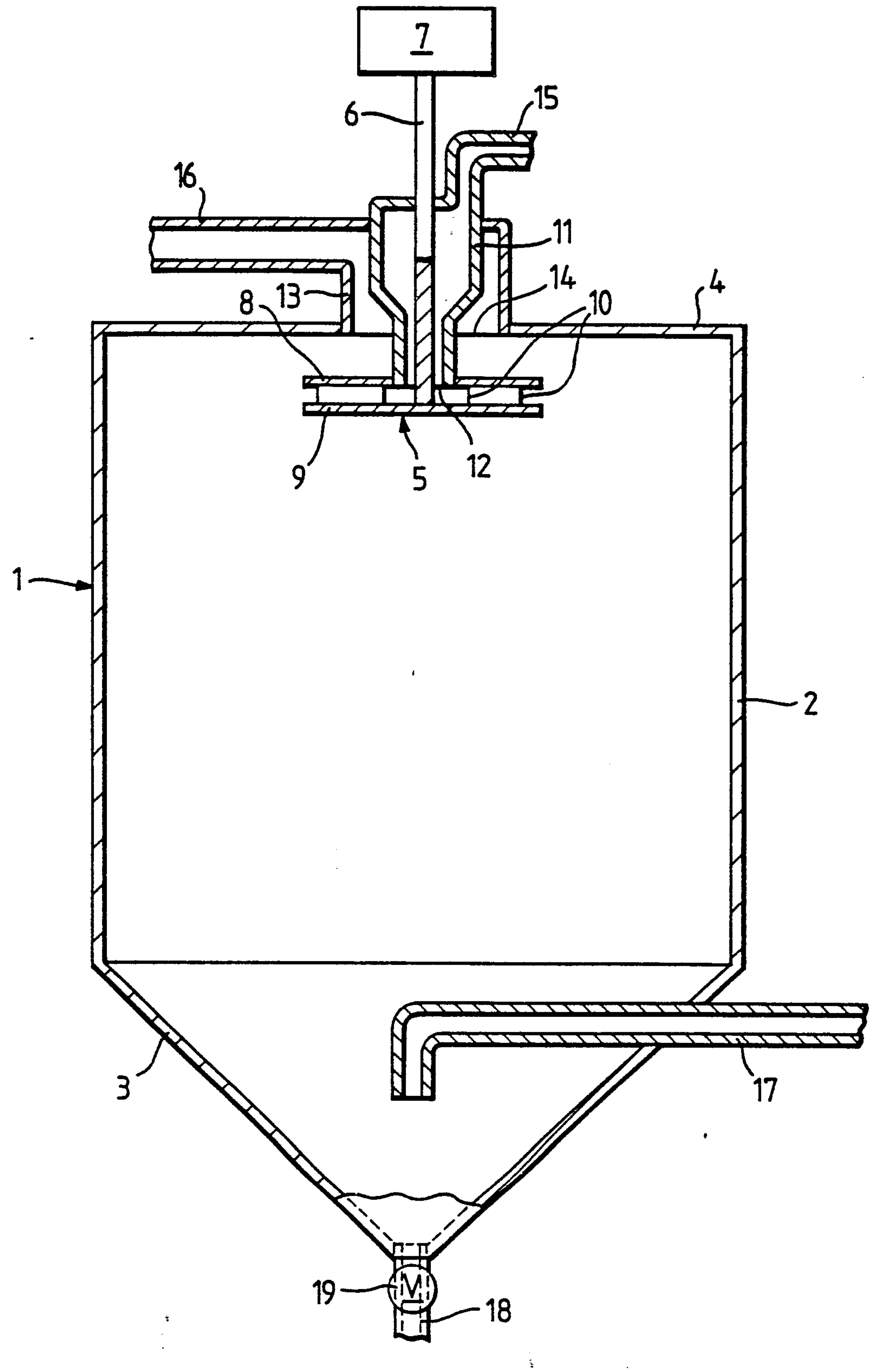

Fig.2.

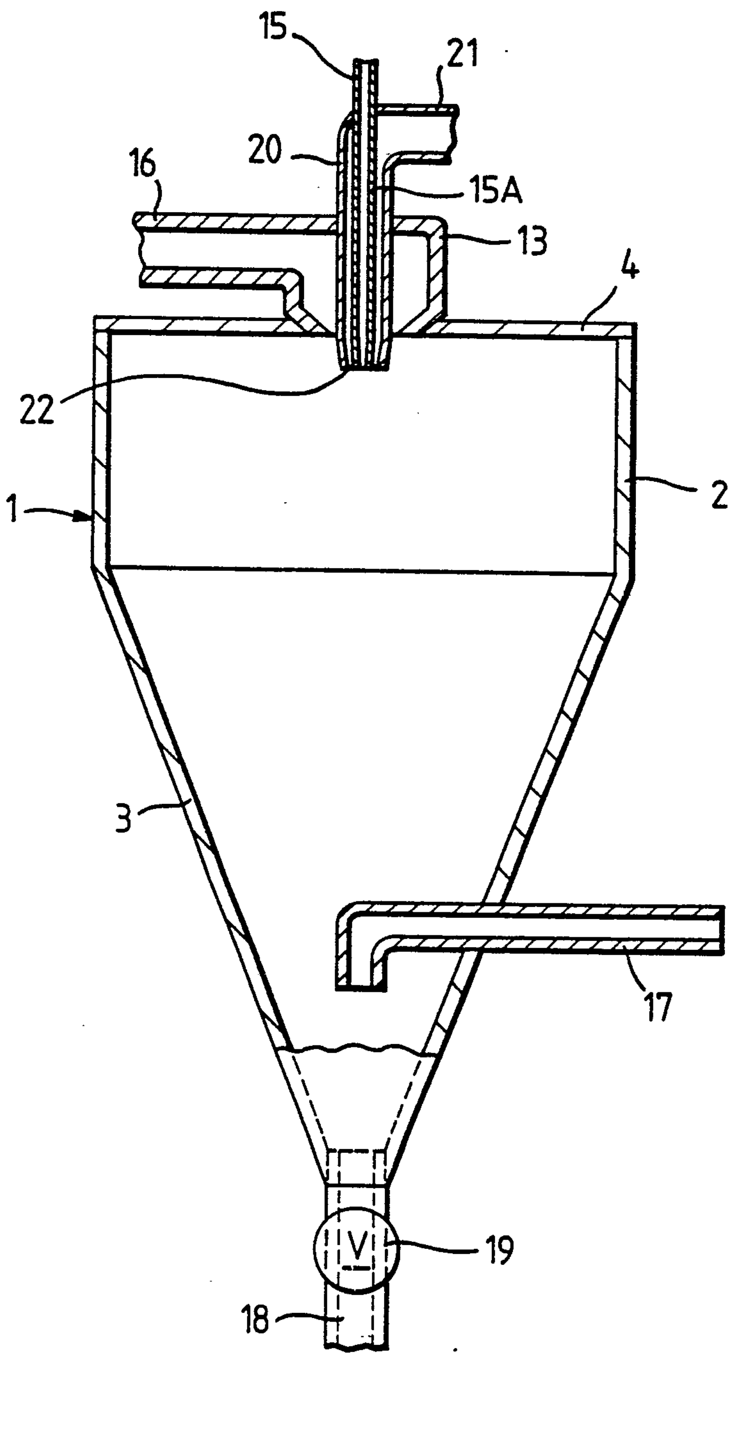

European Patent Office

0113960

Application number

# EUROPEAN SEARCH REPORT

EP 83 30 7211

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | EP-A-0 018 738 (MITSUI)<br>* Claims 1,6; page 6, line 21 - page 7, line 6; page 12, line 18 - page 13, line 28, in particular lines 10,14,27,28; page 13, line 36 - page 14, line 5; example 4 * | 1-3,5, 7-9,11 ,12 | C 08 F 10/00<br>C 08 F 4/62 |
| X,Y D | GB-A-1 540 323 (MITSUI)<br>* Claims 1-12; page 2, lines 24-39; page 2, line 61 - page 3, line 57, in particular lines 43-48 * | 1,2,5, 7-9,11 ,12 | |
| Y | GB-A-1 559 194 (MONTEDISON AND MITSUI)<br>* Claims 1-27; page 2, lines 57-62 * | 1-3,5, 7-9,11 ,12 | TECHNICAL FIELDS SEARCHED (Int. Cl. 3)<br>C 08 F |
| Y | PATENTS ABSTRACTS OF JAPAN, vol. 6, no. 31, 24th February 1982, page 909C-92<br>& JP - A - 56 149 404 (DENKI KAGAKU KOGYO K.K.) 19-11-1981 * Abstract *<br>--- -/- | 1 | |

The present search report has been drawn up for all claims

| Place of search | Date of completion of the search | Examiner |
|---|---|---|
| THE HAGUE | 28-03-1984 | WEBER H. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

0113960

Application number

EP 83 30 7211



## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | JAPANESE PATENTS GAZETTE, week E02, 19th-26th November 1981, issued 24th February 1982, Polymer Chemistry, page 3, no. A17 & JP - A - 56 149404 (DENKI KAGAKU KOGYO CO.) 23-04-1980 * Abstract * --- | 1,4,6, 7,9,11 ,12 | |
| D,Y | EP-A-0 037 182 (I.C.I.) * Claims 1-15 * ----- | 3-10 | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 28-03-1984 | WEBER H. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document